# EUROPEAN PATENT APPLICATION

(11) **EP 4 757 360 A1**
(43) Date of publication of application: **10.06.2026**
(21) Application number: 24849656.4
(22) Date of filing: 02.08.2024
(51) Int. Cl.: H04W 4/70, H04W 8/26, H04L 41/0803, H04W 88/02, H04W 88/14

(54) **METHOD AND APPARATUS FOR PROVIDING IDENTIFICATION INFORMATION FOR INTERNET OF THINGS DEVICE IN COMMUNICATION SYSTEM**

(30) Priority: 03.08.2023 KR 20230101848
(71) Applicant: Samsung Electronics Co., Ltd., Suwon-si, Gyeonggi-do 16677 (KR)
(72) Inventor: KWEON, Kisuk, Suwon-si Gyeonggi-do 16677 (KR)
(74) Representative: HGF
(86) International application number: PCT/KR2024/011406
(87) International publication number: WO 2025/029089

(57) **Abstract**

The present disclosure relates to a 5G or 6G communication system for supporting a higher data transmission rate. The present disclosure can be applied to intelligent services (for example, smart homes, smart buildings, smart cities, smart cars or connected cars, healthcare, digital education, retail businesses, security- and safety-related services, and the like) on the basis of 5G communication technology and IoT-related technology. The present disclosure relates to a method and an apparatus for providing identification information for an IoT device in a communication system. According to an embodiment of the present disclosure, the method by which a network entity provides an IoT-based communication service in a wireless communication system comprises the steps of: checking IoT device identification information for identifying at least one IoT device for the IoT-based communication service; and transmitting, for the IoT-based communication service, the IoT device identification information to another network entity communicating with the network entity.

## Description

### [Technical Field]

The disclosure relates to a method and an apparatus for communication for an Internet of Things (IoT) device in a communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mm Wave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

The disclosure provides a method and an apparatus for efficiently providing IoT device identification information for IoT-based communication services in a wireless communication system.

The disclosure provides a method and an apparatus for effectively providing communication services by using a device that does not use battery power or operates in low power in a wireless communication system.

In addition, the disclosure provides a method and an apparatus for efficiently allocating identification information for an IoT device in a communication environment where multiple IoT devices are operated in a wireless communication system.

In addition, the disclosure provides a method and an apparatus for efficiently allocating identification information for an ambient IoT device in a wireless communication system.

### [Technical Solution]

According to an embodiment of the disclosure, a method for providing an IoT-based communication service by a network entity in a wireless communication system includes identifying IoT device identification information for identifying at least one IoT device for the IoT-based communication service, and transmitting the IoT device identification information for the IoT-based communication service to another network entity communicating with the network entity.

In the method, the IoT device identification information may include at least one of an identifier for identifying a mobile network operator (MNO) in the wireless communication system, an identifier for identifying a 3^{rd} party providing the IoT-based communication service, and an identifier for identifying a specific IoT device related to the 3^{rd} party.

In the method, the IoT device identification information may be allocated by the MNO or a server of the 3^{rd} party.

In the method, the IoT device identification information may identify a group of multiple IoT devices.

In the method, the IoT device identification information may be used for a location-based service of the at least one IoT device.

In addition, according to an embodiment of the disclosure, a network entity which provides an Internet of Things (IoT)-based communication service in a wireless communication system includes a transceiver and a processor configured to identify IoT device identification information for identifying at least one IoT device for the IoT-based communication service, and transmit, through the transceiver, the IoT device identification information for the IoT-based communication service to another network entity communicating with the network entity.

In addition, according to an embodiment of the disclosure, an IoT device for an IoT-based communication service in a wireless communication system includes a transceiver and a processor configured to identify IoT device identification information for identifying at least one IoT device for the IoT-based communication service, and transmit or receive, based on the IoT device identification information, information related to the IoT-based communication service to or from another network entity through the transceiver.

### [Brief Description of Drawings]

FIG. 1 illustrates an example of a structure of a wireless communication system according to an embodiment of the disclosure.
FIG. 2 illustrates an example of a scenario of using ambient IoT in a communication system according to an embodiment of the disclosure.
FIG. 3 illustrates an example of a configuration of a device ID corresponding to identification information of an ambient IoT device according to an embodiment of the disclosure.
FIG. 4 illustrates a device ID allocation scheme of an ambient IoT device using the provisioned scheme according to an embodiment of the disclosure.
FIG. 5 illustrates a device ID allocation scheme of an ambient IoT device using the self-configured scheme according to an embodiment of the disclosure.
FIG. 6 is a flowchart illustrating a device ID allocation procedure using the provisioned scheme according to an embodiment of the disclosure.
FIG. 7 is a flowchart illustrating a device ID allocation procedure using the self-configured scheme according to an embodiment of the disclosure.
FIG. 8 illustrates an example of a structure of a UE according to an embodiment of the disclosure.
FIG. 9 illustrates a structure of a base station or network entity according to an embodiment of the disclosure.

### [Mode for Carrying out the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

As used herein, each of such phrases as "A and/or B," "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order).

In the following description, a base station is an entity that allocates resources to terminals, and may be at least one of a Node B, a base station (BS), an eNode B, a gNode B, a wireless access unit, a base station controller, and a node on a network. A terminal may include an IoT device, a user equipment (UE), a mobile station (MS), a cellular phone, a smartphone, a computer, or a multimedia system capable of performing a communication function. Furthermore, the embodiments of the disclosure as described below may also be applied to other communication systems having similar technical backgrounds or channel types to the embodiments of the disclosure. Moreover, based on determinations by those skilled in the art, the embodiments of the disclosure may also be applied to other communication systems through some modifications without significantly departing from the scope of the disclosure.

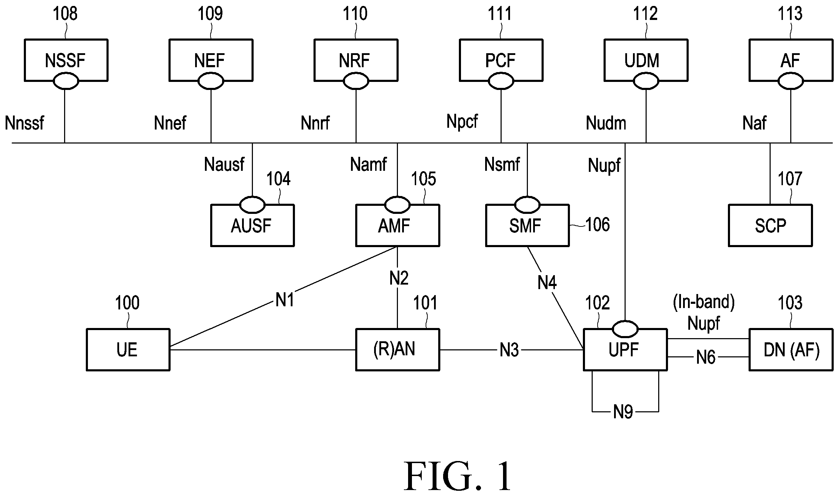

In the disclosure, a network technology may refer to a standard specification (e.g., TS 23.501, TS 23.502, TS 23.503, etc.) defined by the international telecommunication union (ITU) or 3GPP, and each element included in a network structure of FIG. 1 may indicate a physical entity, or software performing an individual function or hardware combined with the software. Reference numerals, denoted as Nx, such as N1, N2, N3, ..., in the drawings represent known interfaces between NFs in a 5G core network (CN), and a detailed description thereof will be omitted since the relevant description may refer to the standard specification (TS 23.501).

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project (3GPP) standards may be used for the sake of descriptive convenience. However, the disclosure is not limited by these terms and names, and may be applied in the same way to systems that conform other standards.

FIG. 1 illustrates an example of a structure of a wirless communication system, and FIG. 1 illustrates an example of a 5G system.

Referrign to FIG. 1, a (radio) access network ((R)AN) 101 is an entity that performs radio resource allocation to a terminal 100, and may include at least one of an eNode B, a Node B, a base station (BS), a next generation radio access network (NG-RAN), a 5G-AN, a wireless access unit, a base station controller, or a node on the network.

The UE 100 may include a user equipment (UE), a next generation UE (NG UE), a mobile station (MS), a cellular phone, a smartphone, a computer, or a multimedia system capable of performing a communication function. Also, in the following description of embodiments of the disclosure, the 5G system will be described by way of example, but the embodiments of the disclosure may also be applied to other communication systems having similar technical backgrounds. Moreover, based on determinations by those skilled in the art, the embodiments of the disclosure may also be applied to other communication systems through some modifications without significantly departing from the scope of the disclosure.

As wireless communication systems evolve from 4G systems to 5G systems, a new core network (CN) referred to as a next generation core (NG core) or a 5G core network (5GC) has been defined. The new core network may fully virtualize existing network entities (NEs) into network functions (NFs). According to an embodiment of the disclosure, a network function (NF) may refer to a network entity, a network component, and a network resource.

According to an embodiment of the disclosure, a 5GC may include the NFs illustrated in FIG. 1. In FIG. 1, the 5GC may include network entities such as a user plane function (UPF) 102, an authentication server function (AUSF) 104, an access and mobility management function (AMF) 105, a session management function (SMF) 106, a service communication proxy (SCP) 107, a network slice selection policy (NSSF) 108, a network exposure function (NEF) 109, a network repository function (NRF) 110, a policy control function (PCF) 111, a unified data management (UDM) 112, and an application function (AF) 113. In addition, the UPF 102 may communicate with a data network (DN) 103 corresponding to an external network such as the Internet by using the Nupf service. The DN 103 may include an AF of an external network. For example, there may be an AF 113 inside the 5GC and an AF included in the DN 103 outside the 5GC, and the AF may be an AF that communicates with the UPF 102 in the DN 103 outside the 5GC. Descriptions of network entities not directly related to the disclosure among the network entities will be omitted for convenience of description. The 5GC is not limited to the example of FIG. 1, and the 5GC may include more or fewer NFs than the NFs illustrated in FIG. 1.

The AMF 105 may be a network function for managing access and mobility of a user equipment (UE) 100. For example, the AMF 105 may perform network functions such as registration, connection, reachability, mobility management, access identification, authentication, and generation of a mobility event.

The SMF 106 may be a network function that manages a packet data network (PDN) connection provided to the UE 100. The PDN connection may be referred to as a packet data unit (PDU) session. For example, the SMF 106 may perform network functions such as session management functions through the establishment, modification, and release of a session and the maintenance of a tunnel between the UPF 102 and the RAN 101 required therefor, functions of allocating and managing an Internet protocol (IP) address of a UE, user plane selection and control, traffic processing control at the UPF 102, and control of billing data collection.

The PCF 111 may be a network function for applying a service policy and a billing policy of a mobile network operator for the UE 100, and a policy for a PDU session.

The UDM 112 may be a network function that stores information of a subscriber. For example, the UDM 112 may perform functions such as generation of authentication information for 3GPP security, processing of a user identifier (ID), management of a list of network functions supporting the UE 100, and management of subscription information.

The NEF 109 may be a function that provides information on the UE 100 to a server outside the 5G network. In addition, the NEF 109 may provide a function of providing information necessary for a service to the 5G network and storing the information in a unified data repository (UDR) (not illustrated).

The UPF 102 may be a function that serves as a gateway for transferring user data (PDU) to the DN 103. More specifically, the UPF 102 may process data so as to transfer data transmitted by the UE 100 to an external network or transfer data introduced from the external network to the UE 100. For example, the UPF 102 may perform network functions such as performing an anchor role between radio access technologies (RATs), packet routing and forwarding, packet inspection, application of a user plane policy, generation of a traffic usage report, and buffering.

The NRF 110 may perform a function of discovering an NF. The AUSF 104 may perform UE authentication in a 3GPP access network and a non-3GPP access network. The NSSF 108 may perform a function of selecting a network slice instance provided to a UE. The DN 103 may be a data network through which the UE 100 transmits or receives data in order to use a service of a network operator or a 3^{rd} party service.

In the disclosure, the UE 100 may include an IoT device. In the disclosure, the IoT device may include a device that does not use battery power or operates with very low power, and such an IoT device is referred to as an ambient IoT device (or simply, ambient IoT) in the disclosure.

According to an embodiment of the disclosure, an ambient IoT device may not have a battery, or may include a very limited energy storage capability. The ambient IoT device may have at least one of the following features.
- Very low power consumption for device operations (e.g., 1~500 µW)
- Very low price of device (e.g., 0.01~0.5$)
- Very low data transmission rate (e.g., 10 kbps)
- A very large number of deployed devices (e.g., hundreds, thousands, tens of thousands, hundreds of thousands, or more than 1,000,000)
- Very low computing capability, very simple structure, and very small size of device
- Not having universal subscriber identity module (USIM), and not including complex communication protocol stack such as transmission control protocol/Internet protocol (TCP/IP)
- Deployable in environments that are difficult for people to access, which causes impossibility of maintenance after deployment (e.g. high pressure, extremely high/low temperature, and humid environment)

In the disclosure, the ambient IoT devices may be classified into the following three types according to the presence or absence of a battery in the device and the type of communication used by the device.

**[Table 1]**

| Device type | Description |
|---|---|
| Device Type A (TY_A) | - Not having Energy Storage (Battery)- Independent signal generation/amplification impossible |
| Device Type B (TY B) | - Having Energy Storage (Battery)- Independent signal |
| | generation/amplification impossible |
| Device Type C (TY_C) | - Having Energy Storage (Battery)- Independent signal generation/amplification possible (including active RF components) |

In addition, ambient IoT devices in the disclosure may have four types of connectivity topologies as shown in the following Table 2. In addition, in the disclosure, the connection type of the ambient IoT devices is not limited to the example of [Table 2], and a connection based on various combination of the four connection topologies is also possible.

**[Table 2]**

| Topology type | Description |
|---|---|
| Topology 1 (T1) | - Connection between base station and ambient IoT (Base Station - Ambient IoT device) |
| Topology 2 (T2) | - Connection between base station and ambient IoT device passing through intermediate node (Base Station - Intermediate node - Ambient IoT device) |
| Topology 3 (T3) | - Connection between base station and base station mediated by assisting node and ambient IoT device (Base Station - Assisting node - Ambient IoT device - Base Station) |
| Topology 4 (T4) | - Connection between UE and ambient IoT device (UE - Ambient IoT device) |

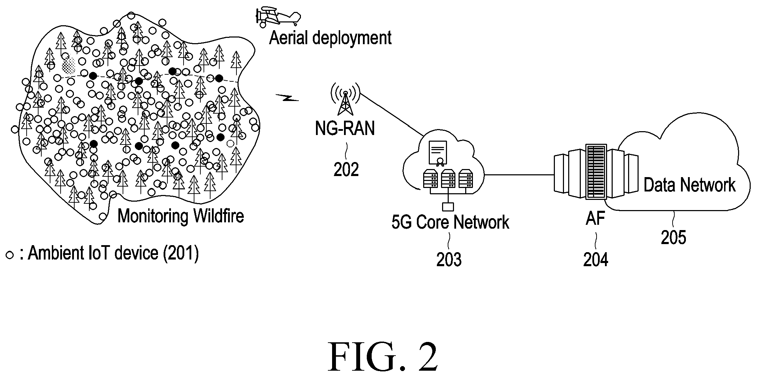

FIG. 2 illustrates an example of a scenario of using ambient IoT in a communication system according to an embodiment of the disclosure.

The communication system of FIG. 2 may include multiple ambient IoT devices 201 deployed in a mountainous area, at least one base station 202 capable of communicating with at least one of the ambient IoT devices 201, a core network 203 connected to the at least one base station 202, and a DN 205 including an AF 204 communicatively connected to the core network 203. In the example of FIG. 2, the basic functions and configurations of the base station 202, the core network 203, and the DN 205 including the AF 204 may refer to the example of FIG. 1.

Referring to FIG. 2, the Forest Service or the Fire Service may deploy hundreds of thousands of ambient IoT devices 201 in the mountains to detect wildfire at an early stage. The number of ambient IoT devices 201 is large, and the deployment area is usually vast and not easily accessible to people, and thus aerial deployment is often performed. The deployed ambient IoT devices 201 may be impossible to maintain (e.g., replace a battery of an ambient IoT device, replace a defective part, etc.) due to the above-mentioned reasons. Once deployed, the ambient IoT devices 201 need to operate and perform the tasks for as short as 10 years and as long as 20 years. Therefore, it is important that the ambient IoT devices 201 operate with little battery consumption. The ambient IoTs 201 after the deployment in the scenario of FIG. 2 may monitor a fire around a mountain. At least one ambient IoT device that has detected a fire among the ambient IoT devices 201 may transmit information notifying that a fire has occurred to the NG-RAN 202 (in the case of a 5G network) by using a wireless network, and the information may be transmitted to the AF 204 (e.g., a 3rd party server providing IoT services, such as a server of the Fire Service in the example of FIG. 2) through the 5G network 203 and the data network 205. As in the example of FIG. 2, the ambient IoT devices 201 may be deployed for the same purpose, such as a fire alarm, and the information notifying the occurrence of the fire and/or data related to the information may be transmitted to the AF (e.g., 3^{rd} party server) 204. The example in FIG. 2 illustrates a fire occurrence scenario in a mountain, but ambient IoT devices may be deployed in various disaster situations or in various commercial services such as sports stadiums or shopping malls used by many people, so as to provide related information.

In the embodiments of the disclosure, a device ID (or referred to as an ambient IoT device ID) allocation scheme for an ambient IoT device having the above-described feature is proposed. For example, devices operating according to the 3GPP standard may use a subscription permanent identifier (SUPI)/international mobile subscriber identity (IMSI) corresponding to identification information inside/stored in a USIM chip, as the ID of the corresponding device. However, an ambient IoT device may not be able to use a USIM, or the number of ambient IoT devices may be too large, so that it is impossible for a mobile network operator to allocate a unique ID to each ambient IoT device. Accordingly, in this disclosure, a device ID allocation scheme suitable for the characteristics and/or usage purposes of an ambient IoT device is proposed.

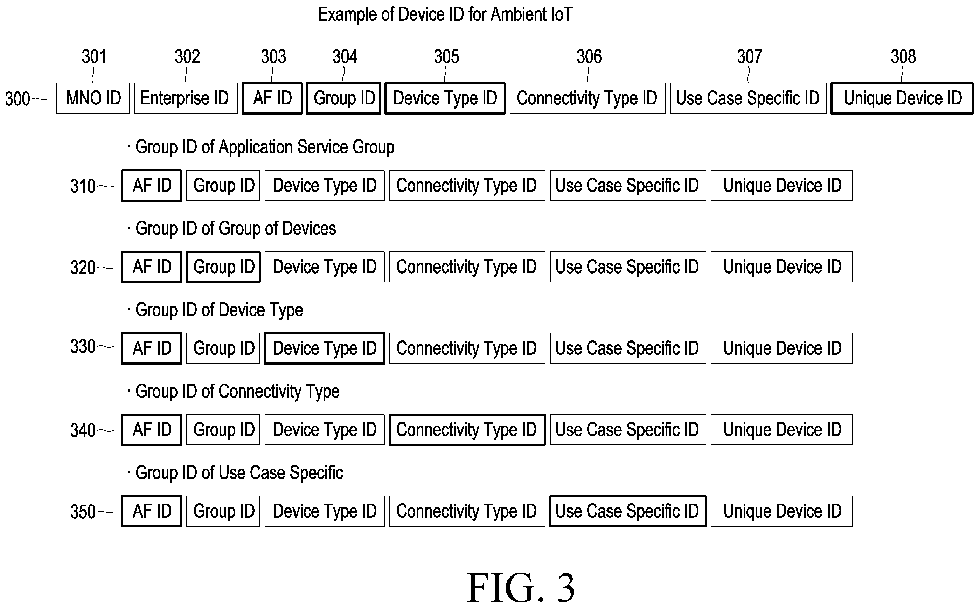

FIG. 3 illustrates an example of a configuration of a device ID corresponding to identification information of an ambient IoT device according to an embodiment of the disclosure.

Ambient IoT devices may be numerous as in the scenario of FIG. 2, and therefore, it may be efficient to group ambient IoT devices in order to control the operations of the ambient IoT devices. For example, such grouping of ambient IoT devices may be based on a 3^{rd} party provider of an AF that communicates with the ambient IoT devices, according to the 3rd party provider's business, and the 3^{rd} party provider may group the ambient IoT devices for various reasons, such as by region, purpose, and the number of ambient IoT devices. In addition, grouping by the ambient device types exemplified in Table 1 or the connectivity types exemplified in Table 2 is also possible, and the ambient IoT devices may be grouped according to a specific use case or a business scenario. The embodiment of FIG. 3 illustrates an example of a device ID of an ambient IoT device, and in addition to at least one combination of various IDs illustrated in FIG. 3, various values may be used as a device ID of an ambient IoT device.

In this embodiment, the definitions of the fields (or elements or IDs) 301 to 308 that constitute the device ID 300 of the ambient IoT device are as follows. In the following description, a 3^{rd} party provider may be understood as a server of the 3^{rd} party provider or an AF.
- Mobile network operator (MNO) ID 301: indicates an ID (i.e., a network identifier) of a mobile network operator, used by a 3^{rd} party provider to communicate with ambient IoT devices. The MNO ID 301 may include at least one of a mobile country code (MCC) and a mobile network code (MNC), and may be configured only with the MNC.
- Enterprise ID 302: indicates an enterprise to which a 3^{rd} party provider belongs. When a task is performed using multiple 3^{rd} party servers, all ambient IoT devices belonging to the enterprise may be identified using the enterprise ID 302.
- AF ID 303: indicates an ID distinguishing the 3^{rd} party provider/server. All ambient IoT devices performing one task or all ambient IoT devices communicating with one AF may be identified.
- Group ID 304: Since there are many ambient IoT devices, it is necessary to group the ambient IoT devices in order to control the same. To this end, the group ID may be used. Ambient IoT devices may be grouped based on various classification criteria such as purpose, capability, or status. That is, the ambient IoT device ID of FIG. 3 may be used to identify a group of ambient IoT devices.
- Device type ID 305: The ambient IoT may be classified into the following types: A (TY_A), B (TY_B), and C (TY_C), as in the example of [Table 1], according to battery capability and communication capability. This is an ID representing the same. This ID may also be used to group the ambient IoT devices by device type.
- Connectivity type ID 306: The ambient IoT device may be classified as Topology 1 (T1), Topology 2 (T2), Topology 3 (T3), or Topology 4 (T4), as in the example of [Table 2], according to its capability of communication with a network and a UE and its topology. This is an ID indicating the same. This ID may also be used to group ambient IoT devices by connectivity type.
- Use case specific ID 307: This ID is an ID that can be allocated according to a use case or scenario in which the ambient IoT device is used. For example, in a scenario of detecting a wildfire, each ambient IoT device needs to inform the location where a fire has occurred when detecting a fire. That is, the location of an ambient IoT device is important. In this case, if the location of an ambient IoT device is used as a use case specific ID of the ambient IoT device and the ambient IoT device only needs to transmit a notification that a fire has occurred, without separately transmitting the location of the fire as data, the 3^{rd} party provider may identify the location of the ambient IoT device only by using the ID of the ambient IoT device. This is one embodiment, and this ID may be used in various use cases.
- Unique device ID 308: This ID is a unique ID for distinguishing each ambient IoT device. The unique device ID 308 may become a globally unique device ID when used together with at least one of IDs such as the MNO ID 301, the enterprise ID 302, and the AF ID 303. Since there are many ambient IoT devices, a 3^{rd} party provider may allocate the unique device ID 308 in a range of arbitrary numbers, and may also alternatively use a manufacturing number of the ambient IoT device as the unique device ID 308. In an optional embodiment, the unique device ID 308 may be defined as any value that can uniquely identify each ambient IoT device by a 3^{rd} party provider.

The elements configuring the device ID 300 of the ambient IoT device represent an example, and the elements of the device ID 300 may be configured freely according to the use purpose of the ambient IoT device or the capability of the device. In addition, as in the example of reference numerals 310 to 350, the group ID of the ambient IoT devices may be configured using various elements of the device ID 300 for grouping the ambient IoT devices. In addition, various elements not mentioned in the above embodiment may be added to the ambient IoT device according to its usage purpose or function. Among the above elements, at least the AF ID 303 and the unique device ID 308 may be included in the device ID 300 of the ambient IoT device.

An embodiment of the disclosure describes a scheme of allocating the device ID 300 to an ambient IoT device.

Device ID allocation to an ambient IoT device may be performed using at least one of the following methods a) to c).
a) Pre-configured scheme
b) Provisioned scheme
c) Self-configured scheme

The pre-configured scheme is a scheme of allocating a device ID before deploying the ambient IoT device. The allocation of the device ID 300 may be performed by a mobile network operator (i.e., MNO) or a 3^{rd} party provider (i.e., AF). For example, it may be allocated to all ambient IoT devices before the deployment below. For example, the allocated device ID such as <MNO ID><AF ID><TY_A><T3><Serial No> includes an MNO ID 301, an AF ID 303, the device type in [Table 1], the topology in [Table 2], and a serial number of the ambient IoT device.

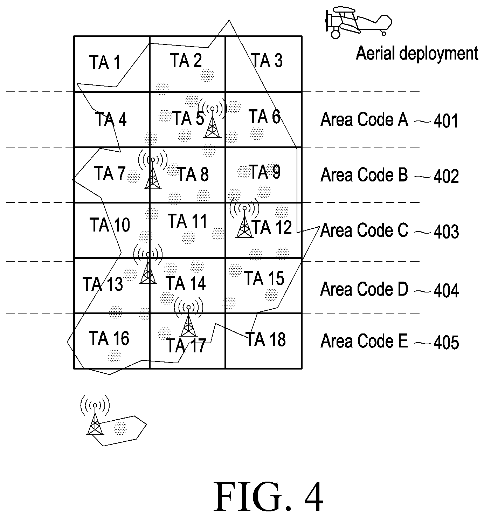

FIG. 4 illustrates a device ID allocation scheme of an ambient IoT device using the provisioned scheme according to an embodiment of the disclosure.

Ambient IoT devices may have a device ID partially allocated by a mobile communication operator or a 3^{rd} party provider as in the pre-configured scheme, before being deployed. For example, <MNO ID><AF ID><TY_A><T3><Serial No> may be allocated. Thereafter, the ambient IoT devices may be deployed in the corresponding region via various means, such as aviation, and then the ambient IoT devices may receive a value provisioned by a 3^{rd} party provider or a mobile network operator (MNO) through a network, and update/identify their own device IDs. For example, as in reference numerals 401 to 405 in FIG. 4, at least one area code (AC) (AC_A, AC_B, AC_C, AC_D, AC_E) may be configured/mapped for a list of tracking areas (TAs), the configuration/mapping information may be broadcast to each ambient IoT device through an NG-RAN through a network, and the ambient IoT device having received the configuration/mapping information may update/identify its device ID by adding the value to its pre-configured device ID. For example, a device ID configured as <MNO ID><AF ID><AC_A><TY_A><T3><Serial No> may be allocated to an ambient IoT deployed in a region of area code A (AC_A). This is merely one embodiment, and various configurations/mapping information may be provisioned after ambient IoTs are deployed and may be used as a device ID.

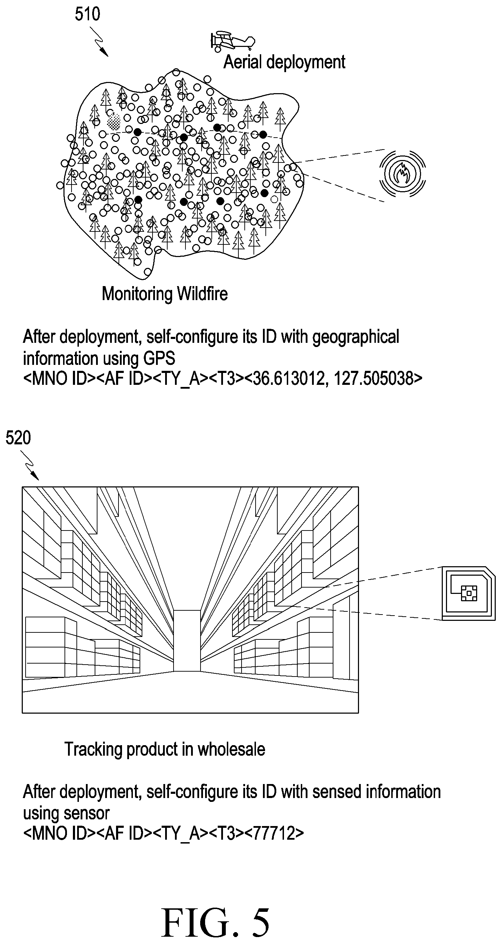

FIG. 5 illustrates a device ID allocation scheme of an ambient IoT device using the self-configured scheme according to an embodiment of the disclosure.

Ambient IoT devices may have device IDs partially allocated by a mobile network operator or a 3^{rd} party provider in the pre-configured scheme before deployment. For example, <MNO ID><AF ID><TY_A><T3><Serial No> may be allocated. Thereafter, ambient IoT devices may be deployed through various means, such as aviation, and then the ambient IoT device may configure or update its own device ID value in various ways. Two use cases are shown in the example of FIG. 5. In the wildfire detection use case 510, after all ambient IoT devices are deployed, each ambient IoT device may check/identify its location by using a global positioning system (GPS) sensor embedded in its device. In this use case, it is important for the ambient IoT device to know the location where a fire has occurred when the fire is detected. The ambient IoT device may use its location information as a use case-specific ID among the elements constituting the device ID. For example, the ambient IoT device may self-configure or update the device ID as follows by using its location information (e.g., 36.613012,127.505038) through GPS (in this case, the device ID may be configured as <MNO ID><AF ID><TY_A><T3><36.613012,127.505038>). In this case, since the location information of the ambient IoT device itself may be a unique value, a unique device ID may be used to replace the serial No. of the corresponding ambient IoT device. The use case 520 in FIG. 5 exemplifies a use case of tracking logistics in a logistics warehouse. In this case, after being deployed in a logistics warehouse, each ambient IoT device may sense a product ID of goods to be tracked by using a sensor embedded in the ambient IoT device. In this use case, the current location of a product and the located product are important information. That is, in this use case, the ID of a product may be used as a use case specific ID. Each ambient IoT device may self-configure or update the device ID as follows by using the ID (e.g., 77712) of the sensed product (in this case, the device ID may be configured as <MNO ID><AF ID><TY_A><T3><77712>). If the product ID is a unique value, a unique device ID may be used instead of the serial number of the ambient IoT device, and if not, the device ID may be self-configured, for example, as <MNO ID><AF ID><TY _A><T3><77712><Serial No>.

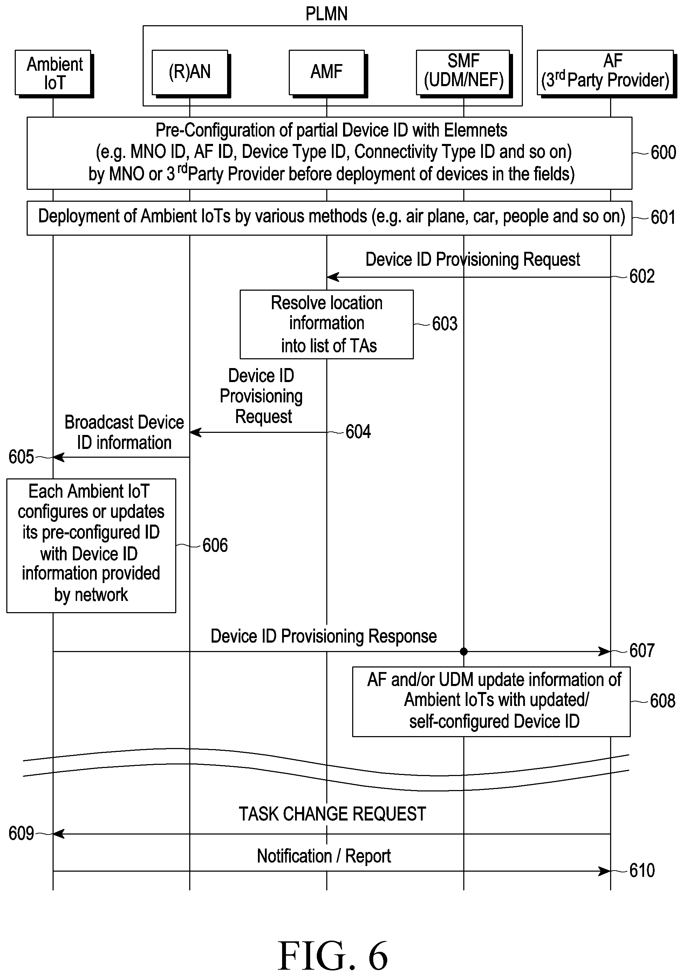

FIG. 6 is a flowchart illustrating a device ID allocation procedure using the provisioned scheme according to an embodiment of the disclosure. In the example of FIG. 6, a basic function of each network entity may refer to the example of FIG. 1.

Referring to FIG. 6, in operation 600, all or some ambient IoT devices may have partial Device IDs pre-configured by an AF (server) of a 3^{rd} party provider or a mobile network operator before being deployed in a field. The pre-configured partial device ID may be elements, the values of which do not change after deployment of the ambient IoT devices. For example, in this embodiment, it is assumed that the partial device ID includes at least one of the MNO ID, AF ID, unique device ID, device type ID, and connectivity type ID elements described in the example of FIG. 3. This is only an example, and various other elements may be pre-configured.

In operation 601, the ambient IoT devices may be deployed in various sensing fields, for example, airports, vehicles, people, mountains, factories, shopping malls, and the like, through various ways.

In operation 602, a 3^{rd} party provider (AF) or a mobile network operator (MNO) may transmit a device ID provisioning request message including device ID-related information related to an AMF in order to update device IDs of the ambient IoT devices. In this embodiment, for convenience of description, location-based information of each ambient IoT device is described as an example of the device ID-related information. The provisioned device ID-related information may be various information according to the use case, as well as location information of the ambient IoT device. For example, the device ID-related information may use various information such as observed product information and local environment information. This embodiment is described based on the above-described embodiment of FIG. 4. For example, the MNO/AF may transmit location information corresponding to each area code (AC) to the AMF as device ID-related information. The location information may be, for example, AC A: latitude: 36.3-37.1, longitude: 70-90, and the like.

In operations 603 and 604, the AMF resolves the location information received from the MNO/AF into a list of tracking areas (TAs). For example, the AMF includes, in a device ID provisioning request message, information obtained by changing the received location information as AC A: TA1, TA2, and TA3 as illustrated in the example of FIG. 4 and FIG. 5, and transmits the same to a (R)AN that is in charge of each TA list. For example, a device ID provisioning request message including information on AC A may be transmitted to (R)AN 1, (R)AN 2, (R)AN 3, and the like of the corresponding area among multiple (R)ANs, and a device ID provisioning request message including information on AC B may be transmitted to (R)AN 4, (R)AN 5, (R)AN 6, and the like of the corresponding area. Although one (R)AN is shown in the example of FIG. 6 for convenience of description, in practice, multiple (R)ANs may participate in the procedure of the disclosure.

In operation 605, each (R)AN may include the information received through the device ID provisioning request message in a device ID information message and broadcast the same to ambient IoT devices. In addition, the device ID information message may also be transferred to ambient IoT devices by groupcast.

In operation 606, each ambient IoT device may update its own device ID by using the information (AC_A) received by its pre-configured device ID by using the information received through the device ID information message. For example, the updated device ID may be configured as <MNO ID><AF ID><AC _A><TY A><T3><Serial No> including AC_A.

In operation 607, each ambient IoT device may include the updated device ID in a device ID provisioning response message and transmit the same to the MNO/AF. Optionally, operation 607 may be omitted according to the use case.

In operation 608, the MNO/AF having received the updated device ID from each ambient IoT through the device ID provisioning response message updates subscription information of each ambient IoT device.

In operation 609, when a task allocated to the ambient IoT(s) is changed, or when a change related to the sensing reporting recovery, the sensing reporting data content, or the task or configuration occurs, the AF/MNO may include the same in a TASK CHANGE REQUEST message and transmit the message to all or some of the ambient IoT devices. In this case, in a case where a change is limited to a specific area code, for example, in a use case in which rainfall is measured, when torrential rain is expected in a southern region, the number of daily rainfall reports may be changed from 1 to 3 only for ambient IoT devices deployed in the southern region, or a device may transmit a TASK CHANGE REQUEST message including information (e.g., the number of daily rainfall reports when the amount of measured rain is equal to or greater than a predetermined value, reporting a specific value to a network when the location of an ambient IoT device is changed due to a surrounding factor, etc.) to ambient IoT devices in a situation (e.g., when the locations of the devices are changed due to a torrential rain, when there is a malfunction of the function of a sensor due to a surrounding fire, etc.) or in a condition (e.g., when the amount of measured rain is equal to or greater than a predetermined value, when the measured temperature is equal to or higher than a predetermined value or is equal to or lower than a predetermined value, etc.), the ambient IoT device having received the message may compare the area code information included in the device ID of the received TASK CHANGE REQUEST message with the area information configured for the ambient IoT device, the ambient IoT device may identify that the received TASK CHANGE REQUEST message is a TASK CHANGE REQUEST message for the ambient IoT device, based on the comparison result, i.e., when the area information configured for the ambient IoT device is related to the area code included in the device ID of the received TASK CHANGE REQUEST message, and the ambient IoT device may update the configuration information (e.g., the number of rainfall reports), based on the information included in the received TASK CHANGE REQUEST message. For example, an ambient IoT device may change the frequency of reporting from one report per day to one report every two days in the Gangwon-do region where a drought is expected. In this case, the corresponding TASK CHANGE REQUEST message may be selectively transmitted only to some regions, such as the Area Code B region in Gangwon Province and the Area Code D region in the southern region. In addition, even if the TASK CHANGE REQUEST message is transmitted to all ambient IoT devices nationwide, different tasks may be allocated to each AC. For example, when an ambient IoT device includes a multi-functional sensor, the AF/MNO may allocate, to the ambient IoT devices, different TASKs for each AC, such as AC_A: temperature measurement, AC_B: rainfall measurement, AC_C: no change, and AC_D: wildfire detection, and the ambient IoT devices having received the same may perform the TASK allocated to each AC.

In operation 610, each ambient IoT device may perform a TASK assigned to itself and may transmit a report and a notification thereon to the MNO/AF. For example, the TASK may be wildfire detection, daily rainfall reporting, etc.

Although an example of the provisioned device ID allocation scheme based on the location of the ambient IoT device has been described in the example of FIG. 6, various information may be provisioned to the ambient IoT device in various use cases, and the operations of the respective ambient IoT devices and related NFs according thereto may be changed.

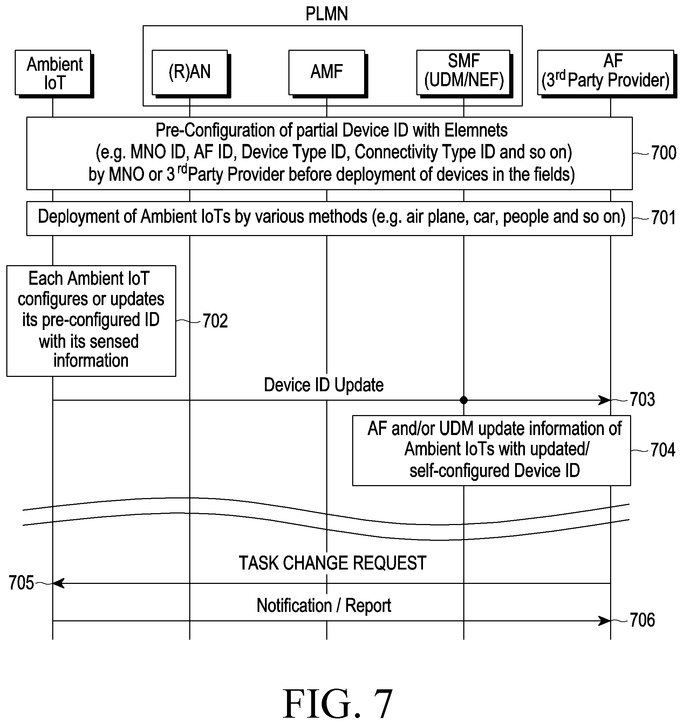

FIG. 7 is a flowchart illustrating a device ID allocation procedure using the self-configured scheme according to an embodiment of the disclosure. In the example of FIG. 7, a basic function of each network entity may refer to the example of FIG. 1.

In operation 700, all or some ambient IoT devices may have partial device IDs pre-configured by an AF (server) of a 3^{rd} party provider or a mobile network operator (MNO) before being deployed in the field. The pre-configured partial device ID may be elements, the values of which do not change after deployment of the ambient IoT devices. For example, in this embodiment, it is assumed that the partial device ID includes at least one of the MNO ID, AF ID, unique device ID, device type ID, and connectivity type ID elements described in the example of FIG. 3. This is only an example, and various other elements may be pre-configured.

In operation 701, the ambient IoT devices may be deployed in various sensing fields, for example, airports, vehicles, people, mountains, factories, shopping malls, and the like, through various ways.

In operation 702, each ambient IoT is deployed and then senses the surrounding environment according to its task. For example, a device that performs a wildfire monitoring task may sense its location information by using a GPS, and a device that tracks the location of a product in a logistics warehouse may sense the ID of a product. For example, each ambient IoT device may update its pre-configured device ID by using sensed location information (36.613012, 127.505038) by using information sensed by itself. For example, the device ID including the location information may be updated as <MNO ID><AF ID><TY A><T3><36.613012,127.505038>.

In operation 703, each ambient IoT device may include its updated device ID in a device ID update message and transmit the message to the MNO/AF. In an optional embodiment, step 703 may be omitted according to the use case.

In operation 704, the MNO/AF having received the updated device ID from the ambient IoT devices through the device ID provisioning response message updates subscription information of each ambient IoT device.

In operation 705, when a task allocated to the ambient IoT devices is changed, or when a change related to the sensing reporting recovery, the sensing reporting data content, or the task or configuration occurs, the AF/MNO may include the same in a TASK CHANGE REQUEST message and transmit the message to all of the ambient IoT devices. In addition, depending on the use case, the area code may be divided and transmitted to the ambient IoT devices according to the location of each ambient IoT device, as in the example of FIG. 6. The ambient IoT devices having received the TASK CHANG REQUET message may update their device IDs by using the received information, as in the example of FIG. 6. In this case, in a case where a change is limited to a specific area code, for example, in a use case in which rainfall is measured, when torrential rain is expected in a southern region, the number of daily rainfall reports may be changed from, for example, 1 to 3, only for ambient IoT devices deployed in the southern region, or the frequency of reporting may be changed from one report per day to one report every two days in a region where a drought is expected. In this case, the corresponding TASK CHANGE REQUEST message may be selectively transmitted only to some regions, such as the Area Code B region corresponding to a region in which a drought is expected and the Area Code D region in the southern region. In addition, even if the TASK CHANGE REQUEST message is transmitted to all ambient IoT devices nationwide, different tasks may be allocated to each AC. For example, when an ambient IoT device includes a multi-functional sensor, the AF/MNO may allocate, to the ambient IoT devices, different TASKs for each AC, such as AC_A: temperature measurement, AC_B: rainfall measurement, AC_C: no change, and AC_D: wildfire detection, and the ambient IoT devices having received the same may perform the TASK allocated to each AC.

In operation 706, each ambient IoT device may perform a TASK assigned to itself and may transmit a report and a notification thereon to the MNO/AF. For example, the TASK may be wildfire detection, daily rainfall reporting, etc.

An example of the self-configured device ID allocation scheme based on the location of the ambient IoT device has been described in the example of FIG. 7, but in various use cases, ambient IoT devices may sense various information to update their own device IDs, and the operations of the respective ambient IoT devices and related NFs according thereto may be changed.

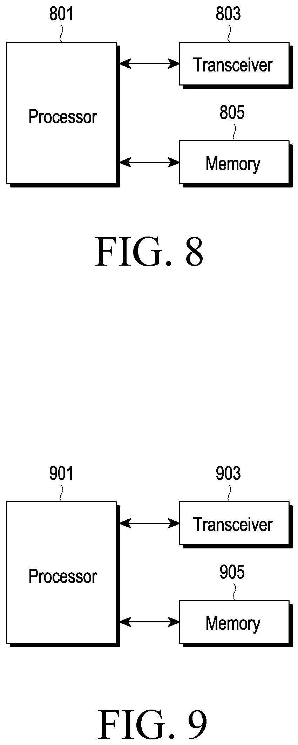

FIG. 8 illustrates an example of a structure of a UE according to an embodiment of the disclosure. The UE in FIG. 8 may include an IoT device.

The UE according to an embodiment of the disclosure may include a processor 801 which controls the overall operation of the UE, a transceiver 803 which includes a transmitter and a receiver, and memory 805. Of course, the example given above is not limiting, and the UE may include a smaller or larger number of components than the components illustrated in FIG. 8.

According to an embodiment of the disclosure, the transceiver 8030 may transmit/receive signals with network entities or other UEs. The signals transmitted/received with network entities may include at least one of control information and data. In addition, the transceiver 803 may receive signals through a radio channel, output the same to the processor 801, and transmit signals output from the processor 801 through the radio channel.

Accordig to an embodiment of the disclosure, the processor 801 may control the UE to perform the operations according to any one of the above-described embodiments. The processor 801, the memory 805, and the transceiver 803 are not necessarily implemented as separate modules, but may be implemented as a single component unit such as a single chip. Also, the processor 801 and the transceiver 803 may be electrically connected to each other. In addition, the processor 801 may be an application processor (AP), a communication processor (CP), a circuit, an application-specific circuit, or at least one processor.

According to an embodiment of the disclosure, the memory 803 may store data such as basic programs for operations of the UE, application programs, and configuration information. In particular, the memory 805 provides the stored data at the request of the processor 801. The memory 805 may include storage media such as a ROM, a RAM, a hard disk, a CD-ROM, and a DVD, or a combination of storage media. In addition, the memory 805 may include multiple memories. Furthermore, the processor 801 may perform the above-described embodiments of the disclosure, based on the programs, stored in the memory 805, for performing the above-described embodiments of the disclosure.

FIG. 9 illustrates a structure of a base station or network entity according to an embodiment of the disclosure.

The network entity according to an embodiment of the disclosure may include a processor 901 which controls the overall operation of the network entity, a transceiver 903 which includes a transmitter and a receiver, and memory 905. Of course, the example given above is not limiting, and the network entity may include a smaller or larger number of components than the components illustrated in FIG. 9.

According to an embodiment of the disclosure, the transceiver 903 may transmit/receive signals with at least one of other network entities or UEs. The signals transmitted/received with at least one of other network entities or UEs may include AT LEAST ONE OF control information and data. If the network entity illustrated in FIG. 9 is a base station, the transceiver 903 may include a transceiver for transmitting/receiving radio signals with UEs and a transceiver or communication interface for transmitting/receiving signals with other networj entities in a core network.

According to an embodiment of the disclosure, the processor 901 may control the network entity to perform the operations according to any one of the embodiments of FIGS. 1 to 7. The processor 901, the memory 905, and the transceiver 903 are not necessarily implemented as separate modules, but may be implemented as a single component unit such as a single chip. Also, the processor 901 and the transceiver 903 may be electrically connected to each other. In addition, the processor 901 may be an application processor (AP), a communication processor (CP), a circuit, an application-specific circuit, or at least one processor.

According to an embodiment of the disclosure, the memory 905 may store basic programs, application programs, and data, such as configuration information, for the operation of the network entity. In particular, the memory 905 provides the stored data at the request of the processor 901. The memory 905 may include storage media such as a ROM, a RAM, a hard disk, a CD-ROM, and a DVD, or a combination of storage media. In addition, the memory 905 may include multiple memories. Furthermore, the processor 901 may perform the above-described embodiments of the disclosure, based on the programs, stored in the memory 905, for performing the embodiments.

It should be noted that the above-described configuration diagrams, illustrative diagrams of control/data signal transmission methods, illustrative diagrams of operation procedures, and structural diagrams are not intended to limit the scope of the disclosure. That is, all constituent elements, entities, or operation steps described in the embodiments of the disclosure should not be construed as being essential for the implementation of the disclosure, and the disclosure may be implemented with out impairing the essential features of the disclosure by including only some constituent elements. Also, the above respective embodiments may be employed in combination, as necessary. For example, the methods proposed in the disclosure may be partially combined with each other to operate a network entity and a terminal.

The above-described operations of a base station or terminal may be implemented by providing any unit of the base station or terminal device with a memory device storing corresponding program codes. That is, a controller of the base station or terminal device may perform the above-described operations by reading and executing the program codes stored in the memory device by means of a processor or central processing unit (CPU).

Various units or modules of an entity, a base station device, or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof. That is, it will be apparent to those skilled in the art that other variants based on the technical idea of the disclosure may be implemented. Also, the above respective embodiments may be employed in combination, as necessary. For example, the methods proposed in the disclosure may be partially combined with each other to operate a network entity and a terminal. Moreover, although the above embodiments have been described based on the 5G or NR system, other variants based on the technical idea of the embodiments may also be implemented in other communication systems such as LTE, LTE-A, or LTE-A-Pro systems.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method for providing an Internet of Things (IoT)-based communication service by a network entity in a wireless communication system, the method comprising:
identifying IoT device identification information for identifying at least one IoT device for the IoT-based communication service; and
transmitting the IoT device identification information for the IoT-based communication service to another network entity communicating with the network entity.

2. The method of claim 1, wherein the IoT device identification information comprises at least one of:
an identifier for identifying a mobile network operator (MNO) in the wireless communication system,
an identifier for identifying a 3^{rd} party providing the IoT-based communication service, and
an identifier for identifying a specific IoT device related to the 3^{rd} party.

3. The method of claim 2, wherein the IoT device identification information is allocated by the MNO or a server of the 3^{rd} party.

4. The method of claim 1, wherein the IoT device identification information identifies a group of multiple IoT devices.

5. The method of claim 1, wherein the IoT device identification information is used for a location-based service of the at least one IoT device.

6. A network entity which provides an Internet of Things (IoT)-based communication service in a wireless communication system, the network entity comprising:
a transceiver; and
a processor configured to:
identify IoT device identification information for identifying at least one IoT device for the IoT-based communication service; and
transmit, through the transceiver, the IoT device identification information for the IoT-based communication service to another network entity communicating with the network entity.

7. The network entity of claim 6, wherein the IoT device identification information comprises at least one of:
an identifier for identifying a mobile network operator (MNO) in the wireless communication system,
an identifier for identifying a 3^{rd} party providing the IoT-based communication service, and
an identifier for identifying a specific IoT device related to the 3^{rd} party.

8. The network entity of claim 7, wherein the IoT device identification information is allocated by the MNO or a server of the 3^{rd} party.

9. The network entity of claim 6, wherein the IoT device identification information identifies a group of multiple IoT devices.

10. The network entity of claim 6, wherein the IoT device identification information is used for a location-based service of the at least one IoT device.

11. An Internet of Things (IoT) device for an IoT-based communication service in a wireless communication system, the IoT device comprising:
a transceiver; and
a processor configured to:
identify IoT device identification information for identifying at least one IoT device for the IoT-based communication service; and
transmit or receive, based on the IoT device identification information, information related to the IoT-based communication service to or from another network entity through the transceiver.

12. The IoT device of claim 11, wherein the IoT device identification information comprises at least one of:
an identifier for identifying a mobile network operator (MNO) in the wireless communication system,
an identifier for identifying a 3^{rd} party providing the IoT-based communication service, and
an identifier for identifying a specific IoT device related to the 3^{rd} party.

13. The IoT device of claim 12, wherein the IoT device identification information is allocated by the MNO or a server of the 3^{rd} party.

14. The IoT device of claim 11, wherein the IoT device identification information identifies a group of multiple IoT devices.

15. The IoT device of claim 11, wherein the IoT device identification information is used for a location-based service of the at least one IoT device.
